# EUROPÄISCHE PATENTSCHRIFT

(11) **EP 1 673 561 B1**
(45) Veröffentlichungstag und Bekanntmachung des Hinweises auf die Patenterteilung: **18.07.2007**
(21) Anmeldenummer: 04765210.2
(22) Anmeldetag: 15.09.2004
(51) Int. Cl.: F16H 63/20, F16H 63/34, F16H 63/30

(54) **SCHALTEINRICHTUNG**
SHIFTING DEVICE
DISPOSITIF DE CHANGEMENT DE VITESSE

(30) Priorität: 13.10.2003 DE 10347492
(43) Veröffentlichungstag der Anmeldung: 28.06.2006
(73) Patentinhaber: ZF FRIEDRICHSHAFEN AG, 88038 Friedrichshafen (DE)
(72) Erfinder: SCHEPPERLE, Bernd, 78464 Konstanz (DE)
(86) Internationale Anmeldenummer: PCT/EP2004/010296
(87) Internationale Veröffentlichungsnummer: WO 2005/038309

(56) Entgegenhaltungen:
- EP-A- 0 633 412
- DE-A- 19 525 834
- DE-A- 19 843 584
- US-A- 5 271 291

## Beschreibung

Die Erfindung betrifft eine Schalteinrichtung nach dem Oberbegriff von Anspruch 1.

Zur Schaltung eines Getriebes insbesondere in einem Fahrzeug wird eine Schalteinrichtung im Getriebe vorgesehen, mit deren Hilfe die einzelne Gangstufen eingelegt werden können. Dazu können Teile der Schalteinrichtung manuell vom Fahrzeugführer bewegt werden oder aber es sind von einem Hilfsmedium betätigte Aktuatoren vorgesehen, welche die zur Schaltung der Gangstufen notwendige Bewegung von Teilen der Schalteinrichtung durchführen.

Üblicherweise sind die beim Auswählen der einzelnen Gangstufen auszuübenden Kräfte geringer als die beim Schalten der ausgewählten Gangstufe auszuübenden Kräfte, was dazu führt, dass die Elemente der Wähleinrichtung an der Schalteinrichtung anders dimensioniert werden können als die zur Durchführung der Schaltung erforderlichen Bauteile.

Die Kosten für eine derartige Schalteinrichtung eines Getriebes sind im wesentlichen Abhängig von der Komplexität der verwendeten Bauteile, von ihrem Werkstoff, vom Aufwand für die Bearbeitung der Bauteile, und dabei insbesondere für den Aufwand der spanenden Bearbeitung, der Umformung und der Wärmebehandlung.

Aus der gattungsbildenden DE-A1 198 43 584 ist eine Schalteinrichtung für ein mehrgängiges Schaltgetriebe bekannt, bei der auf einer Schaltwelle eine Vielzahl von Schaltgabeln angeordnet sind. Eine Wählvorrichtung ermöglicht die Auswahl einer der Schaltgabeln bei einer Verdrehung der Schaltwelle. Bei einer axialen Verschiebung der Schaltwelle wird die jeweils ausgewählte Schaltgabel zur Durchführung des Schaltvorganges betätigt. Eine zur Schaltwelle parallele Verriegelungswelle wird mit der Verdrehung der Schaltwelle ebenfalls verdreht und verhindert als eine Sperreinrichtung die Bewegung der nicht ausgewählten Schaltgabeln. Die Bauteile müssen aufwendig und kostenintensiv hergestellt werden. Nach ihrem Zusammenbau ist das Zusammenwirken der Bauteile laut und führt zu häufig kritisierten Geräuschproblemen.

Ebenfalls bekannt ist aus der EP-B1 0 633 412 eine Betätigungsvorrichtung für eine Schiebemuffe in einem Schaltgetriebe mit einer entlang ihrer Achse verschiebbaren Schaltstange, an der eine Schaltgabel sowie ein Mitnehmer starr angeordnet sind. Die Betätigungsvorrichtung ist als ein Kunststoff-Metall-Verbundbauteil ausgebildet, bei dem ein Metallteil, das den Mitnehmer sowie einen Kern für die Schaltstange bildet, mit einem Kunststoff umspritzt ist und die Schaltgabel ausschließlich aus dem Kunststoff besteht. Hier muss aufwendig eine Kombination aus Kunststoff- und Metall-Bauteil geschaffen werden, um die erforderliche Stabilität eines zum Schalten einer Gangstufe notwendigen Bauelementes zu gewährleisten.

Der Erfindung liegt die Aufgabe zugrunde, eine Schalteinrichtung aufzuzeigen, die kostengünstig herstellbar und geräuscharm ist ohne aufwendige Verbundkonstruktionen zu beinhalten.

Die Aufgabe wird gelöst durch eine Schalteinrichtung mit den Merkmalen des Anspruchs 1. Ausgestaltungen sind Gegenstand von Unteransprüchen.

Nach der Erfindung weist eine Schalteinrichtung zur Schaltung eines Getriebes eine Schaltwelle auf, auf der eine Vielzahl von Schaltgabeln oder Schaltschwingen zur Durchführung eines Schaltvorganges axial verschiebbar angeordnet sind. Ebenfalls sind eine Wähleinrichtung zur Auswahl einer der Schaltgabeln oder Schaltschwingen aus der Vielzahl der Schaltgabeln oder Schaltschwingen sowie Sperreinrichtungen zur Verhinderung der Bewegung von nicht ausgewählten Schaltgabeln oder Schaltschwingen vorgesehen. Dabei sind die Elemente zur Durchführung des Schaltvorganges aus einem höherfesten Werkstoff gebildet, während die Elemente der Wähleinrichtung und die Elemente der Sperreinrichtung aus einem niedrigfesten Werkstoff gebildet sind.

In einer vorteilhaften Ausgestaltung umfassen die Elemente der Wähleinrichtung für jede Schaltgabel oder Schaltschwinge ringförmige Mitnehmer, die mit der Schaltgabel oder Schaltschwinge axial fixiert und auf der Schaltwelle zur Durchführung des Schaltvorganges verschiebbar sind. Die ringförmigen Mitnehmer sind um die Schaltwelle zur Auswahl einer der Schaltgabeln oder Schaltschwingen verdrehbar und sie weisen Elemente einer Mitnahmeeinrichtung auf, die ein axiales Verschieben der ringförmigen Mitnehmer durch die axiale Bewegung der Schaltwelle ermöglichen zur Durchführung des Schaltvorganges.

Eine weitere vorteilhafte Ausbildung zeigt, dass die ringförmigen Mitnehmer an den Schaltgabeln oder Schaltschwingen mit den Sperreinrichtungen zur Verhinderung der axialen Bewegung von nicht ausgewählten Schaltgabeln oder Schaltschwingen auf der Schaltwelle zusammenwirken.

In einer besonders vorteilhaften Ausgestaltung umfassen die Elemente der Sperreinrichtung verdrehbare Sperrscheiben, deren Umfang in den axialen Bewegungsbereich der ringförmigen Mitnehmer hineinragt. Die Kontur der Sperrscheiben ist derart ausgebildet, dass als Segmente ausgebildete Bereiche der Sperrscheiben eine axiale Bewegung der ringförmigen Mitnehmer auf der Schaltwelle zulassen, während andere Bereiche der Sperrscheiben geeignet sind, eine axiale Bewegung der ringförmigen Mitnehmer zu verhindern.

Vorteilhafterweise weisen die Mitnahmeeinrichtungen an den ringförmigen Mitnehmern Aussparungen auf, die mit Erhebungen auf der Schaltwelle zusammenwirken. Die Erhebungen durchdringen die Aussparungen, wenn die zugehörige Schaltgabel oder Schaltschwinge nicht geschaltet wird und die Erhebungen verschieben die Mitnahmeeinrichtungen axial, wenn die ausgewählte Schaltgabel oder Schaltschwinge verschoben werden soll, um die Gangstufe zu schalten.

Die Elemente der Wähleinrichtung weisen vorzugsweise Verzahnungen auf, die ineinander greifen und ein Verdrehen der Elemente der Wähleinrichtung zueinander ermöglichen. Dabei können je nach Ausgestaltung nur Teile der ringförmigen Mitnehmer Verzahnungen aufweisen.

Als eine Ausgestaltung kann der als Ausschnitt ausgebildete Bereich der Sperrscheiben eine Verzahnung aufweisen, die in die Verzahnung eines ringförmigen Mitnehmers eingreifen kann.

Besonders vorteilhaft wird eine erfinderische Ausgestaltung dann, wenn die Elemente zur Durchführung des Schaltvorganges aus Stahl bzw. Aluminium gebildet sind, während die Elemente der Wähleinrichtung und die Elemente der Sperreinrichtung aus Aluminium bzw. Kunststoff oder aus einem Verbundwerkstoff gebildet sind.

Bei einer besonders vorteilhaften Ausbildung der Erfindung ist ein Aktuator vorgesehen zur axialen Betätigung der Schaltwelle, während ein weiterer Aktuator vorgesehen ist, der die Elemente der Wähleinrichtung und die Elemente der Sperreinrichtung betätigt. Dabei kann ein Getriebe vorgesehen sein zur Übersetzung einer Rotationsbewegung des die Schaltwelle betätigenden Aktuators in eine axiale Bewegung der Schaltwelle.

Vorteilhafterweise ist wenigstens ein Aktuator vorgesehen als ein elektromechanischer Aktuator, als ein pneumatischer Aktuator oder als ein hydraulischer Aktuator.

Die Erfindung wird anhand einer Zeichnung näher erläutert.

Es zeigen:
- Fig. 1: eine erste Schalteinrichtung mit einzelnen Elementen und
- Fig. 2: eine zweite Darstellung einzelner Elemente einer zweiten Ausführung der Schalteinrichtung.

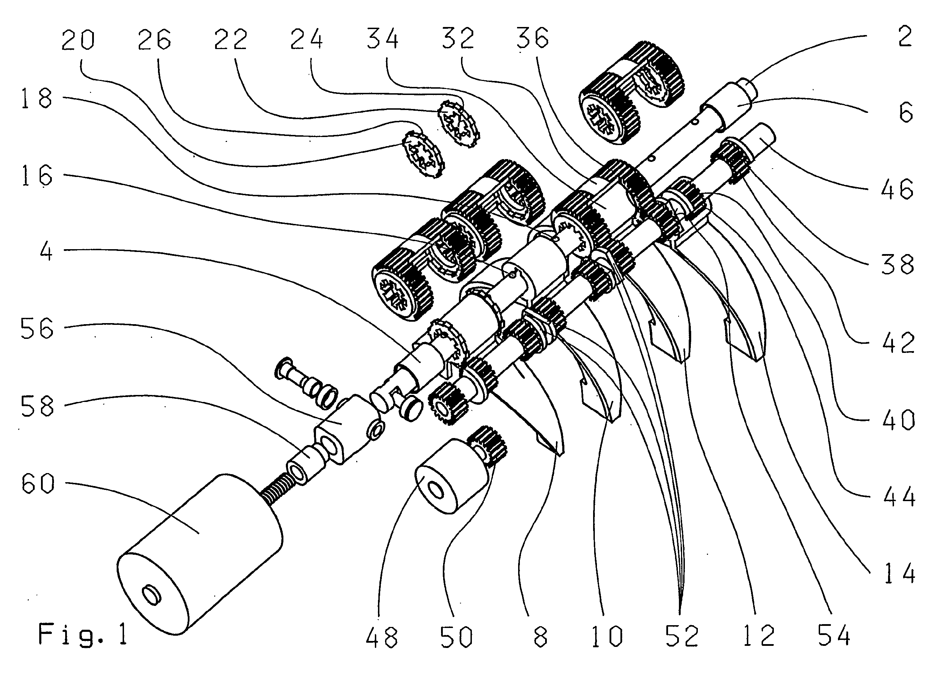

Nach der Fig. 1 sind auf einer Schaltwelle 2, die in Lagern 4 und 6 in einem hier nicht gezeigten Gehäuse des Schaltgetriebes axial beweglich gelagert sind, vier Schaltgabeln 8, 10, 12 und 14 angeordnet. Die Schaltgabeln sind relativ zur Schaltwelle 2 beweglich angeordnet. Zu Zwecken der Anschaulichkeit und des besseren Verständnisses sind nicht alle Schaltgabeln auf der Welle 2 angeordnet dargestellt, bzw. einzelne Elemente der Schalteinrichtung sind separat dargestellt. In der komplettierten Anordnung sind jedoch alle Schaltgabeln so wie für die Schaltgabel 12 gezeigt auf der Schaltwelle 2 vorgesehen. Dargestellt ist in der Fig. 1 die Anordnung der drei Schaltgabeln 8, 10 und 12 auf der Schaltwelle 2, während die Schaltgabel 14 hier unterhalb der Schaltwelle 2 angeordnet ist. Die nachfolgend beschriebenen Bauteile gelten analog für jede Schaltgabel, wenn sie auch gegebenenfalls nur anhand einer Schaltgabel beschrieben sind.

Die Schaltwelle 2 weist an der Schaltgabel 10 Erhebungen in Form von zwei Stiften 16 und 18 auf, die die Schaltgabel 10 auf beiden Seiten einschließen. Zwischen den Stiften 16 und 18 und der Schaltgabel 10 ist auf jeder Seite der Schaltgabel 10 eine Mitnahmeeinrichtung in Form eines Mitnahmebleches 20 und 22 vorgesehen. Die Mitnahmebleche 20 und 22 weisen an ihrem inneren Umfang Aussparungen 24 auf, durch die die Stifte 16 und 18 axial hindurchbewegt werden können. Die zwischen den Aussparungen 24 verbleibenden Bereiche am Innenumfang der Mitnahmebleche 20 und 22 können durch Verdrehen der Mitnahmebleche 20 und 22 auf der Schaltwelle 2 mit den Stiften 16 und 18 zur Überdeckung gebracht werden. Dadurch wird bei einer axialen Bewegung der Schaltwelle 2 über die Stifte 16 bzw. 18 und die Mitnahmebleche 20 bzw. 22 auch die Schaltgabel 10 axial bewegt und eine Gangstufe in dem Getriebe kann geschaltet werden.

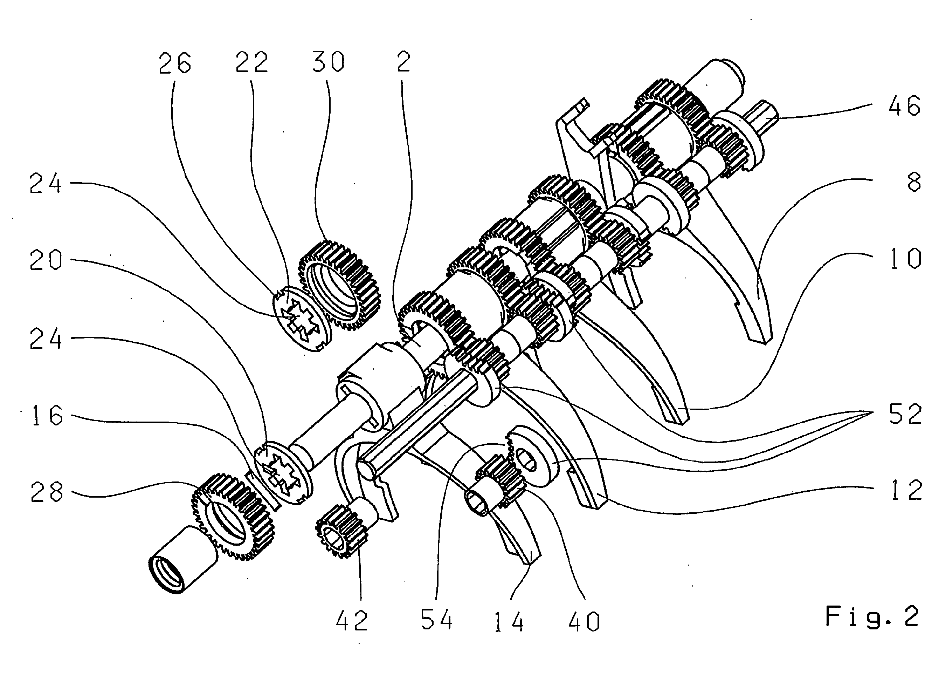

Um die Mitnahmebleche 20 und 22 auf der Schaltwelle 2 verdrehen zu können, weisen die Mitnahmebleche 20 und 22 auf ihrem äußeren Umfang eine Kontur 26 auf, die mit einer jeweils angepassten Kontur an einem ringförmigen Mitnehmern 28 bzw. 30 zusammenwirkt und eine drehfeste Verbindung zwischen Mitnahmeblech 20 bzw. 22 und ringförmigem Mitnehmer 28 bzw. 30 bildet (Fig. 2).

An der Schaltgabel 12 ist ein solcher ringförmiger Mitnehmer in Form eines kombinierten ringförmigen Mitnehmers 32 dargestellt, bei dem jeweils zwei einzelne, ringförmige Mitnehmer in einem Bauteil vereint sind. Um eine Verdrehung des ringförmigen Mitnehmers 32 auf der Schaltwelle 2 zu ermöglichen ohne dass die Arme der Schaltgabel 12 behindert werden, weist der ringförmige Mitnehmer 32 eine Aussparung 34 auf. Auf dem äußeren Umfang der ringförmigen Mitnehmer 28, 30, 32 ist eine Verzahnung 36 vorgesehen, die mit korrespondierenden Verzahnungen 38, 40 an Zahnrädern 42 und 44 in Eingriff steht. Dies gilt wiederum für alle Schaltgabeln 8, 10, 12 und 14 entsprechend. Die Zahnräder 42 und 44 sind drehfest auf einer Welle 46 angeordnet, die im wesentlichen parallel zur Schaltwelle 2 ausgerichtet ist. Die Welle wird von einem Aktuator 48 in Form eines Elektromotors über eine Übersetzungsstufe mit einer Verzahnung 50 verdreht. Die Anordnung kann aber auch so ausgebildet sein, dass der Aktuator 48 direkt und ohne Übersetzungsstufe mit der Welle 46 verbunden ist. Seitlich an den Zahnrädern 42 und 44 ist je eine Sperrscheibe 52 einer Sperreinrichtung vorgesehen, die keinen vollständig kreisförmigen Umfang aufweist, sondern eine Aussparung in Form eines Kreissegmentes 54 hat.

Die Sperrscheiben 52 an den verschiedenen Schaltgabeln 8, 10, 12, 14 weisen die Aussparungen jeweils an verschiedenen Stellen ihres Umfangs auf, so dass immer die beiden Sperrscheiben 52 an einer Schaltgabel gleiche Aussparungen haben, während die Aussparungen an den anderen Sperrscheiben 52 der anderen Schaltgabeln demgegenüber auf der Drehachse der gemeinsamen Welle 46 verdreht vorgesehen sind. Die Sperrscheiben 52 wirken mit den ringförmigen Mitnehmern 28, 30, 32 zur Bildung der Sperreinrichtung zusammen, beispielsweise über die Kanten der Verzahnungen der ringförmigen Mitnehmer 28, 30, 32. Dabei halten die Sperrscheiben 52 die ringförmigen Mitnehmer 28, 30, 32 und damit die Schaltgabeln in ihrer axialen Position auf der Schaltwelle 2 und erlauben nur im Bereich der Segmente 54 an den Sperrscheiben 52 eine axiale Bewegung der jeweilig ausgewählten Schaltgabel.

Die Schaltwelle 2 ist über einen Mitnehmer 56 und einen Kugelgewindetrieb 58 mit einem Aktuator 60 in Form eines Elektromotors verbunden. Anstelle des Kugelgewindetriebs 58 ist auch eine hier nicht gezeigte Zahnradübersetzung anwendbar. Die gezeigten Aktuatoren 48 und 60 sind in Fig. 1 koaxial bzw. achsparallel zu den zu bewegenden Wellen 2 und 46 angeordnet. Durch eine entsprechende Übersetzung ist auch eine zu den Wellen in einem Winkel stehende Anordnung, beispielsweise eine rechtwinklige Anordnung möglich.

Um eine Gangstufe zu schalten, müssen die Schaltgabeln 8, 10, 12 oder 14 axial verschoben werden. Die Schaltgabeln 8, 10, 12 und 14 sind auf der Schaltwelle 2 frei gelagert und müssen zum Einschalten über die Stifte 16, 18 und die Mitnahmebleche 20, 22 axial formschlüssig mit der Schaltwelle 2 verbunden werden. Die verzahnten ringförmigen Mitnehmer 28, 30, 32 werden über die mit den Zahnrädern 42, 44 versehene Welle 46 verdreht. Die Schaltwelle 2 bewegt sich zum Einschalten der Gangstufen nur in axiale Richtung. Das selektive Vorwählen der zu schaltenden Gangstufe geschieht dadurch, dass die Mitnahmebleche 20, 22 über die sie umfassenden, ringförmigen Mitnehmer 28, 30, 32 um einen diskreten Winkel verdreht werden. Analog zu diesem Winkel sind die Aussparungen 24 in den Mitnahmeblechen 20, 22 vorgesehen, welche bei den nicht geschalteten Gangstufen, sobald sich die Schaltwelle bewegt, zu einem Eintauchen der Stifte 16 bzw. 18 führen und damit zu keiner Mitnahme der zugehörigen Schaltgabel. Bei der in dieser Position zu schaltenden Schaltgabel hat jedoch das betreffende Mitnahmeblech 20 bzw. 22 keine Aussparung 24, so dass es zu einer axialen Mitnahme kommt und diese Gangstufe geschaltet wird. In jeder der verschiedenen Wählstellungen ist immer nur ein Mitnahmeblechpaar 20, 22 ohne Aussparungen 24 in Überdeckung mit den Stiften 16, 18, so dass eine Mitnahme erfolgt. Alle übrigen Mitnahmebleche sind mit den Aussparungen 24 in Überdeckung mit den jeweiligen Stiften 16, 18 und es erfolgt keine Mitnahme.

Die Fig. 2 zeigt eine Schalteinrichtung nach der Fig. 1 in einer teilweise aufgelösten Darstellung. Hier sind die Segmente 54 an den Sperrscheiben 52 mit einer Verzahnung versehen, damit die Sperrscheiben in der nicht sperrenden Winkelstellung in die Außenverzahnung der zugehörigen ringförmigen Mitnehmer 28, 30 eingreifen können. Die ringförmigen Mitnehmer 28, 30 sind hier als separate Bauteile ausgeführt, so dass die Notwendigkeit der Bildung einer Aussparung 36, wie an dem ringförmigen Mitnehmer 32 erforderlich, entfällt.

Da die an der Auswahl der zu schaltenden Schaltgabel beteiligten Elemente der Schalteinrichtung nur vergleichsweise geringen Kräften ausgesetzt sind, genügt eine Ausbildung dieser Elemente aus einem geringer festen Werkstoff, wie beispielsweise einem Kunststoff oder einem Nichteisenmetall, wie beispielsweise Aluminium. Aluminium ist gegenüber Stahl ein niedrigfester Werkstoff, und Kunststoff ist sowohl gegenüber Stahl als auch gegenüber Aluminium ein niedrigfester Werkstoff.
Geeignet für eine Ausbildung aus Kunststoff sind in der gezeigten Ausführung die Übersetzungsstufe mit der Verzahnung 50 sowie die Welle 46 und alle auf der Welle 46 angeordneten Zahnräder 42, 44 und Sperrscheiben 52. Ebenfalls aus Kunststoff gefertigt sein können die ringförmigen Mitnehmer 20, 30, 32 sowohl in der kombinierten Ausführung, als auch in der separaten Aufteilung. Die Elemente aus Kunststoff können vorgeformt werden und erfordern keine oder nur wenig Bearbeitung. Sie sind dadurch wesentlich billiger als aus höherfesten Werkstoffen gebildete Systeme. Ein weiterer Vorteil besteht darin, dass aus Kunststoff gefertigte Elemente ein geringeres Geräuschentwicklungsverhalten haben, da Kunststoff im wesentlichen geräuschdämpfende Eigenschaften besitzt. Bisher bekannte und häufig kritisierte Geräuschprobleme wie Getrieberasseln und Getriebeklappern können dadurch vermieden werden.

### Bezugszeichen

- 2: Schaltwelle
- 4: Lager
- 6: Lager
- 8: Schaltgabel
- 10: Schaltgabel
- 12: Schaltgabel
- 14: Schaltgabel
- 16: Stift
- 18: Stift
- 20: Mitnahmeblech
- 22: Mitnahmeblech
- 24: Aussparung
- 26: Kontur
- 28: Mitnehmer
- 30: Mitnehmer
- 32: Mitnehmer
- 34: Aussparung
- 36.: Verzahnung
- 38: Verzahnung
- 40: Verzahnung
- 42: Zahnrad
- 44: Zahnrad
- 46: Welle
- 48: Aktuator
- 50: Verzahnung
- 52: Sperrscheibe
- 54: Segment
- 56: Mitnehmer
- 58: Kugelgewindetrieb
- 60: Aktuator

## Patentansprüche

1. Schalteinrichtung zur Schaltung eines Getriebes mit einer Schaltwelle (2), auf der eine Vielzahl von Schaltgabeln oder Schaltschwingen (8, 10, 12, 14) zur Durchführung eines Schaltvorganges axial verschiebbar angeordnet sind, mit einer Wähleinrichtung (28, 30, 32, 42, 44, 46) zur Auswahl einer Schaltgabel oder Schaltschwinge (8, 10, 12, 14) aus der Vielzahl der Schaltgabeln oder Schaltschwingen (8, 10, 12, 14) zur Durchführung des Schaltvorganges und mit Sperreinrichtungen (52) zur Verhinderung der Bewegung von nicht ausgewählten Schaltgabeln oder Schaltschwingen (8, 10, 12, 14), **dadurch gekennzeichnet, dass** die Elemente (2, 8, 10, 12, 14, 20, 22) zur Durchführung des Schaltvorganges aus einem höherfesten Werkstoff gebildet sind und die Elemente der Wähleinrichtung (28, 30, 32, 42, 44, 46) und der Sperreinrichtung (52) aus einem niedrigfesten Werkstoff gebildet sind.

2. Schalteinrichtung nach Anspruch 1, **dadurch gekennzeichnet, dass** die Elemente der Wähleinrichtung für jede Schaltgabel oder Schaltschwinge (8, 10, 12, 14) ringförmige Mitnehmer (28, 30, 32) umfassen, die mit der Schaltgabel oder Schaltschwinge (8, 10, 12, 14) axial fixiert und auf der Schaltwelle (2) zur Durchführung des Schaltvorganges verschiebbar sind, die um die Schaltwelle (2) zur Auswahl einer der Schaltgabeln oder Schaltschwingen (8, 10, 12, 14) verdrehbar sind und die Elemente einer Mitnahmeeinrichtung (20, 22) aufweisen, die ein axiales Verschieben der ringförmigen Mitnehmer (28, 30, 32) durch die axiale Bewegung der Schaltwelle (2) ermöglichen zur Durchführung des Schaltvorganges.

3. Schalteinrichtung nach Anspruch 1 oder .2, **dadurch gekennzeichnet, dass** die ringförmigen Mitnehmer (28, 30, 32) an den Schaltgabeln oder Schaltschwingen (8, 10, 12, 14) mit den Sperreinrichtungen (52) zur Verhinderung der axialen Bewegung von nicht ausgewählten Schaltgabeln oder Schaltschwingen auf der Schaltwelle (2) zusammenwirken.

4. Schalteinrichtung nach einem der Ansprüche 1 bis 3, **dadurch gekennzeichnet, dass** die Elemente der Sperreinrichtung verdrehbare Sperrscheiben (52) umfassen, deren Umfang in den axialen Bewegungsbereich der ringförmigen Mitnehmer (28, 30, 32) hineinragt und deren Kontur derart ausgebildet ist, dass als Segmente (54) ausgebildete Bereiche der Sperrscheiben (52) eine axiale Bewegung der ringförmigen Mitnehmer (28, 30, 32) auf der Schaltwelle (2) zulassen, während andere Bereiche der Sperrscheiben (52) geeignet sind, eine axiale Bewegung der ringförmigen Mitnehmer (28, 30, 32) zu verhindern.

5. Schalteinrichtung nach einem der Ansprüche 1 bis 4, **dadurch gekennzeichnet, dass** die Mitnahmeeinrichtungen (20, 22) an den ringförmigen Mitnehmern (28, 30, 32) Aussparungen (24) aufweisen, die mit Erhebungen (16, 18) auf der Schaltwelle (2) zusammenwirken, so dass die Erhebungen (16, 18) die Aussparungen (24) durchdringen, wenn die zugehörige Schaltgabel oder Schaltschwinge (8, 10, 12, 14) nicht geschaltet wird und die Erhebungen (16, 18) die Mitnahmeeinrichtungen (20, 22) axial verschieben, wenn die ausgewählte Schaltgabel oder Schaltschwinge (8, 10, 12, 14) verschoben wird.

6. Schalteinrichtung nach einem der Ansprüche 1 bis 5, **dadurch gekennzeichnet, dass** die Elemente der Wähleinrichtung (28, 30, 32, 42, 44, 46) Verzahnungen (36, 38, 40) aufweisen, die ineinander greifen und ein Verdrehen der Elemente der Wähleinrichtung (28, 30, 32, 42, 44, 46) zueinander ermöglichen.

7. Schalteinrichtung nach einem der Ansprüche 1 bis 6, **dadurch gekennzeichnet, dass** nur Teile der ringförmigen Mitnehmer (32) Verzahnungen (36) aufweisen.

8. Schalteinrichtung nach einem der Ansprüche 4 bis 7, **dadurch gekennzeichnet, dass** der als Ausschnitt (54) ausgebildete Bereich der Sperrscheiben (52) eine Verzahnung aufweist, die in die Verzahnung eines ringförmigen Mitnehmers (28, 30) eingreifen kann.

9. Schalteinrichtung nach einem der Ansprüche 1 bis 8, **dadurch gekennzeichnet, dass** die Elemente (2, 8, 10, 12, 14, 20, 22) zur Durchführung des Schaltvorganges aus Stahl bzw. Aluminium gebildet sind.

10. Schalteinrichtung nach einem der Ansprüche 1 bis 9, **dadurch gekennzeichnet, dass** die Elemente (28, 30, 32, 42, 44, 46) der Wähleinrichtung aus Aluminium bzw. Kunststoff gebildet sind.

11. Schalteinrichtung nach einem der Ansprüche 1 bis 10, **dadurch gekennzeichnet, dass** die Elemente (52) der Sperreinrichtung aus Aluminium bzw. Kunststoff gebildet sind.

12. Schalteinrichtung nach einem der Ansprüche 1 bis 11, **dadurch gekennzeichnet, dass** ein Aktuator (60) vorgesehen ist zur axialen Betätigung der Schaltwelle (2) und ein weiterer Aktuator (48) vorgesehen ist, der die Elemente (28, 30, 32, 42, 44, 46) der Wähleinrichtung und die Elemente (52) der Sperreinrichtung betätigt.

13. Schalteinrichtung nach Anspruch 12, **dadurch gekennzeichnet, dass** ein Getriebe (58) vorgesehen ist zur Übersetzung einer Rotationsbewegung des die Schaltwelle (2) betätigenden Aktuators (60) in eine axiale Bewegung der Schaltwelle (2).

14. Schalteinrichtung nach einem der Ansprüche 12 oder 13, **dadurch gekennzeichnet, dass** elektromechanische, pneumatische oder hydraulische Aktuatoren vorgesehen sind.

## Claims

1. The invention relates to a shifting component of a transmission with a shifting shaft (2) on which a multitude of gearshift forks or levers (8, 10, 12, 14) are arranged in axially displaceable manner for performance of a gearshift, and with a selecting component (28, 30, 32, 42, 44, 46) for selecting a gearshift fork or lever (8, 10, 12, 14) from the multitude of gearshift forks or levers (8, 10, 12, 14) for performance of the gearshift, and with locking devices (52) to prevent movement of non-selected gearshift forks or levers (8, 10, 12, 14), **characterized in that** the elements (2, 8, 10, 12, 14, 20, 22) for performance of the gearshift are made of a higher-strength material and the elements of the selecting component (28, 30, 32, 42, 44, 46) and the locking devices (52) are made of a lower-strength material.

2. A shifting component according to claim 1, **characterized in that** for each gearshift fork or lever (8, 10, 12, 14), the elements of the selecting component comprise ring-shaped drivers (28, 30, 32) which are axially fixed with the gearshift fork or lever (8, 10, 12, 14) and are displaceable on the shifting shaft (2) for performance of the gearshift, which are rotatable around the shifting shaft (2) for selection of one of the gearshift forks or levers (8, 10, 12, 14) and feature the elements of a driving device (20, 22), which through axial movement of the shifting shaft (2) permit axial displacement of the ring-shaped drivers (28, 30, 32) for performance of the gearshift.

3. A shifting component according to claim 1 or 2, **characterized in that** the ring-shaped drivers (28, 30, 32) on the gearshift forks or levers (8, 10, 12, 14) cooperate with the locking devices (52) for prevention of the axial movement of non-selected gearshift forks or levers on the shifting shaft (2).

4. A shifting component according to one of the claims 1 through 3, **characterized in that** the elements of the locking device comprise rotatable locking disks (52) whose circumferences overlap with the axial motion range of the ring-shaped drivers (28, 30, 32) and whose contours are such that segmental (54) areas of the locking disks (52) permit axial motion of the ring-shaped drivers (28, 30, 32) on the shifting shaft (2) while other areas of the locking disks (52) are suited to prevent axial motion of the ring-shaped drivers (28, 30, 32).

5. A shifting component according to one of the claims 1 through 4, **characterized in that** the driving devices (20, 22) on the ring-shaped drivers (28, 30, 32) feature recesses (24) which interact with humps (16, 18) on the shifting shaft (2) in such a way that the humps (16, 18) reach into the recesses (24) when the relevant gearshift fork or lever (8, 10, 12, 14) is not actuated, and that the humps (16, 18) axially displace the driving devices (20, 22) when the selected gearshift fork or lever (8, 10, 12, 14) is displaced.

6. A shifting component according to one of the claims 1 through 5, **characterized in that** the elements of the selecting component (28, 30, 32, 42, 44, 46) feature gears (36, 38, 40) which mesh and permit rotation of the elements of the selecting component (28, 30, 32, 42, 44, 46).

7. A shifting component according to one of the claims 1 through 6, **characterized in that** only parts of the ring-shaped drivers (32) feature gears (36).

8. A shifting component according to one of the claims 4 through 7, **characterized in that** the segmental (54) area of the locking disks (52) features a gear which can mesh with the gear of a ring-shaped driver (28, 30).

9. A shifting component according to one of the claims 1 through 8, **characterized in that** the elements (2, 8, 10, 12, 14, 20, 22) for performance of the gearshift are made of steel or aluminum.

10. A shifting component according to one of the claims 1 through 9, **characterized in that** the elements (28, 30, 32, 42, 44, 46) of the selecting component are made of aluminum or plastic.

11. A shifting component according to one of the claims 1 through 10, **characterized in that** the elements (52) of the locking device are made of aluminum or plastic.

12. A shifting component according to one of the claims 1 through 11, **characterized in that** an actuator (60) is provided for axial actuation of the shifting shaft (2), and another actuator (48) is provided which actuates the elements (28, 30, 32, 42, 44, 46) of the selecting component and the elements (52) of the locking device.

13. A shifting component according to claim 12, **characterized in that** a gear (58) is provided for conversion of a rotary motion of the actuator (60) acting on the shifting shaft (2) into an axial motion of the shifting shaft (2).

14. A shifting component according to one of the claims 12 or 13, **characterized in that** electromechanical, pneumatic, or hydraulic actuators are provided.

## Revendications

1. Dispositif de commande pour la commande d'une boîte de vitesses, comprenant un arbre de commande (2) sur lequel une pluralité de fourchettes ou coulisses de commande (8, 10, 12, 14) sont disposées mobiles en translation axiale pour l'exécution d'une opération de commande, un dispositif de sélection (28, 30, 32, 42, 44, 46) destiné à sélectionner une fourchette ou coulisse de commande (8, 10, 12, 14) de la pluralité des fourchettes ou coulisses de commande (8, 10, 12, 14) pour l'exécution de l'opération de commande, et des dispositifs de verrouillage (52) destinés à interdire le déplacement de fourchettes ou coulisses de commande (8, 10, 12, 14) non sélectionnées, **caractérisé en ce que** les éléments (2, 8, 10, 12, 14, 20, 22) destinés à l'exécution de l'opération de commande sont réalisés en une matière de plus haute résistance mécanique et les éléments du dispositif de sélection (28, 30, 32, 42, 44, 46) et du dispositif de verrouillage (52) sont réalisés en une matière de plus basse résistance mécanique.

2. Dispositif de commande selon la revendication 1, **caractérisé en ce que** les éléments du dispositif de sélection comprennent des entraîneurs annulaires (28, 30, 32) pour chaque fourchette ou coulisse de commande (8, 10, 12, 14), qui sont fixés axialement à la fourchette ou coulisse de commande (8, 10, 12, 14) et peuvent coulisser sur l'arbre de commande (2) pour l'exécution de l'opération de commande, qui peuvent tourner autour de l'arbre de commande (2) pour la sélection d'une des fourchettes ou coulisses de commande (8, 10, 12, 14) et qui comportent des éléments d'un dispositif d'entraînement (20, 22) qui permettent de réaliser une translation axiale des entraîneurs annulaires (28, 30, 32) par le déplacement axial de l'arbre de commande (2) pour l'exécution de l'opération de commande.

3. Dispositif de commande selon la revendication 1 ou 2, **caractérisé en ce que** les entraîneurs annulaires (28, 30, 32) fixés aux fourchettes ou coulisses de commande (8, 10, 12, 14) coopèrent avec les dispositifs de verrouillage (52) pour interdire le déplacement axial de fourchettes ou coulisses de commande non sélectionnées sur l'arbre de commande (2).

4. Dispositif de commande selon l'une des revendications 1 à 3, **caractérisé en ce que** les éléments du dispositif de verrouillage comprennent des plaquettes de verrouillage (52) pouvant tourner, dont la périphérie est engagée dans la zone du déplacement axial des entraîneurs annulaires (28, 30, 32) et dont le profil est conformé de manière que des zones des plaquettes de verrouillage (52) ayant la forme de segments (54) admettent un déplacement axial des entraîneurs annulaires (28, 30, 32) sur l'arbre de commande (2), tandis que d'autres zones des plaquettes de verrouillage (52) sont appropriées pour interdire un déplacement axial des entraîneurs annulaires (28, 30, 32).

5. Dispositif de commande selon l'une des revendications 1 à 4, **caractérisé en ce que** les dispositifs d'entraînement (20, 22) fixés aux entraîneurs annulaires (28, 30, 32) présentent des évidements (24) qui coopèrent avec des protubérances (16, 18) prévues sur l'arbre de commande (2), de telle sorte que les protubérances (16, 18) traversent les évidements (24) lorsque la fourchette ou coulisse de commande (8, 10, 12, 14) correspondante n'est pas commandée, et que les protubérances (16, 18) déplacent les dispositifs d'entraînement (20, 22) en translation axiale lorsque la fourchette ou coulisse de commande (8, 10, 12, 14) sélectionnée est déplacée en translation.

6. Dispositif de commande selon l'une des revendications 1 à 5, **caractérisé en ce que** les éléments du dispositif de sélection (28, 30, 32, 42, 44, 46) comportent des dentures (36, 38, 40) qui engrènent entre elles et permettent une rotation des éléments du dispositif de sélection (28, 30, 32, 42, 44, 46) les uns par rapport aux autres.

7. Dispositif de commande selon l'une des revendications 1 à 6, **caractérisé en ce que** seules des parties des entraîneurs annulaires (32) comportent des dentures (36).

8. Dispositif de commande selon l'une des revendications 4 à 7, **caractérisé en ce que** la zone des plaquettes de verrouillage (52) ayant la forme d'une découpe (54) comporte une denture qui peut engrener dans la denture d'un entraîneur annulaire (28, 30).

9. Dispositif de commande selon l'une des revendications 1 à 8, **caractérisé en ce que** les éléments (2, 8, 10, 12, 14, 20, 22) destinés à l'exécution de l'opération de commande sont réalisés en acier ou en aluminium.

10. Dispositif de commande selon l'une des revendications 1 à 9, **caractérisé en ce que** les éléments (28, 30, 32, 41, 44, 46) du dispositif de sélection sont réalisés en aluminium ou en matière plastique.

11. Dispositif de commande selon l'une des revendications 1 à 10, **caractérisé en ce que** les éléments (52) du dispositif de verrouillage sont réalisés en aluminium ou en matière plastique.

12. Dispositif de commande selon l'une des revendications 1 à 11, **caractérisé en ce qu**'il est prévu un actionneur (60) pour l'actionnement axial de l'arbre de commande (2) et un autre actionneur (48) qui actionne les éléments (28, 30, 32, 42, 44, 46) du dispositif de sélection et les éléments (52) du dispositif de verrouillage.

13. Dispositif de commande selon la revendication 12, **caractérisé en ce qu**'il est prévu un mécanisme (58) pour la transformation d'un mouvement de rotation de l'actionneur (60) qui actionne l'arbre de commande (2) en un déplacement axial de l'arbre de commande (2).

14. Dispositif de commande selon l'une des revendications 12 ou 13, **caractérisé en ce qu'**il est prévu des actionneurs électromécaniques, pneumatiques ou hydrauliques.
